# EUROPÄISCHE PATENTSCHRIFT

(11) **EP 3 207 321 B1**
(45) Veröffentlichungstag und Bekanntmachung des Hinweises auf die Patenterteilung: **20.11.2019**
(21) Anmeldenummer: 15790849.2
(22) Anmeldetag: 14.10.2015
(51) Int. Cl.: F26B 1/00

(54) **BANDTROCKNUNGSANLAGE UND VERFAHREN ZUM STEUERN EINER BANDTROCKNUNGSANLAGE**
BELT DRIER AND METHOD OF OPERATING A BELT DRIER
SÉCHEUR À BANDES ET MÉTHODE D'OPERATION D'UN SÉCHEUR À BANDES

(30) Priorität: 18.10.2014 EP 14189458; 18.01.2015 DE 102015200680
(43) Veröffentlichungstag der Anmeldung: 23.08.2017
(73) Patentinhaber: Haarslev Industries GmbH, 76646 Bruchsal (DE)
(72) Erfinder: KREUZER, Gerd, 75056 Sulzfeld (DE)
(74) Vertreter: Heilein, Ernst - Peter
(86) Internationale Anmeldenummer: PCT/EP2015/073804
(87) Internationale Veröffentlichungsnummer: WO 2016/059123

(56) Entgegenhaltungen:
- DE-U1-202010 007 475
- GB-A- 191 812
- GB-A- 786 692
- JP-A- S 609 461
- JP-B2- 2 881 177

## Beschreibung

Die vorliegende Erfindung betrifft eine Bandtrocknungsanlage für ein bis zur pastösen Konsistenz entwässertes Deponie- oder Klärschlammmaterial nach dem Oberbegriff von Anspruch 1 sowie ein Verfahren zum Steuern einer solchen Bandtrocknungsanlage.

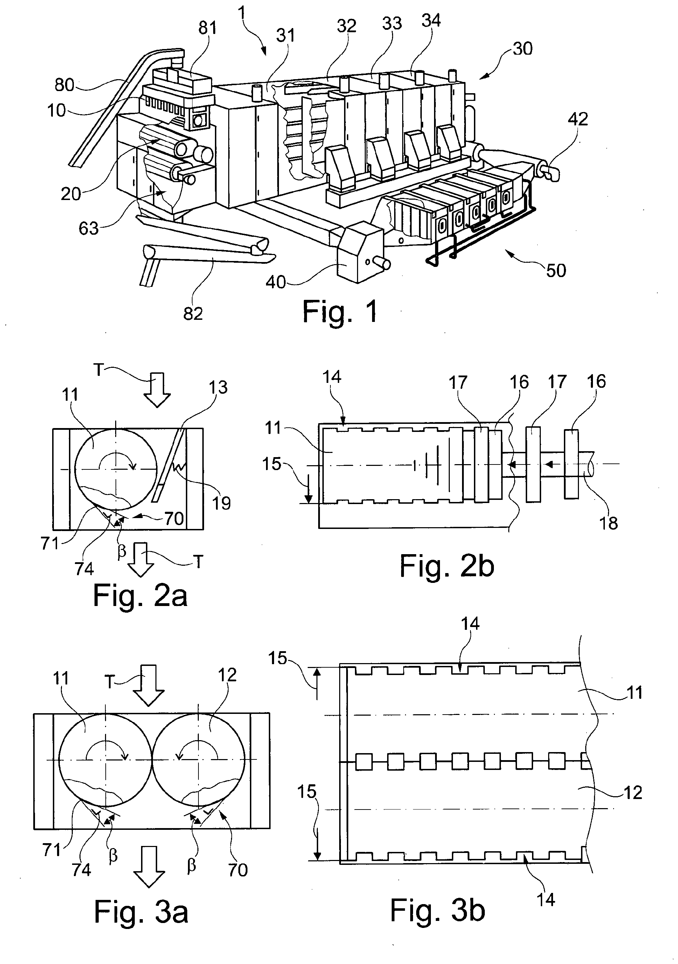

Trocknungsanlagen mit einem Bandtrockner als Kernkomponente (nachfolgend Bandtrocknungsanlagen genannt) gestatten die effiziente Durchführung kontinuierlicher, nach dem Konvektionsprinzip arbeitender, Trocknungsverfahren. Wie in Fig. 1 an Hand einer typischen Bandtrocknungsanlage 1 der Anmelderin gezeigt, wird dabei das zu trocknende Material 60 mittels einer zuführenden Fördereinrichtung 80, einer Dosiereinrichtung 81 und mittels einer im Transportweg T angeordneten und auf das Material 60 abgestimmten Aufgabevorrichtung 10 fortlaufend als möglichst gleichmäßiges Haufwerk 62 auf ein luftdurchlässiges Förderband 20 aufgegeben. Die Aufgabe als Haufwerk 62 bewirkt eine Vergrößerung der spezifischen Oberfläche des zu trocknenden Materials 60 als Voraussetzung für intensive Wasserverdampfung und optimale Trocknung.

Nach der Verteilung auf das Transportband 20 durchläuft das Haufwerk 62 schonend und statisch eine tunnelartige Trocknungszone 30, an deren Ende es als Trockengut 63 auf eine abführende Fördereinrichtung 82 abgeworfen wird. Durch Vermeidung von Reibung des Haufwerks 62 wird sowohl die mechanische Abnutzung der Einrichtung 1 reduziert, als auch Staubbildung minimiert und somit Explosionsgefahr gebannt.

Die Trocknungszone 30 ist für gewöhnlich in einzelne Trocknungskammern 31, 32 ... aufgeteilt. In den einzelnen Kammern 31, 32 ... der Trocknungszone 30 wird das Haufwerk 62 von Warmluft 41 durchströmt, die in den meisten Einsatzbereichen mittels eines Lüftungssystem 40 im Kreislauf geführt wird. Der modulare Aufbau einer Trocknungszone 30 aus Kammern 31, 32 ... ermöglicht die einfache Kapazitätserweiterung durch Einfügen zusätzlicher Trocknungskammern 33, 34 .... Die Trocknung erfolgt im Niedertemperaturbereich bei ca. 80 bis 140 °C.

Die im Bandtrockner 1 aufgefeuchtete Luft wird mittels eines Abluftgebläses 42 aus der Trocknungszone 30 abgezogen und durch eine Reihe von Wärmetauschern 50 geführt: ein Erster senkt die Temperatur der Trocknungsluft, in einer zweiten Stufe, einem Kondensator, wird die Luft weiter abgekühlt und dadurch die Brüden auskondensiert. Anschließend wird in einer dritten Stufe die Umluft wieder angewärmt. Dieses System ermöglicht eine weitgehende Wiederverwendung der Trocknerabluft, sowie eine Reduzierung des Energiebedarfs durch interne Wärmerückgewinnung.

Bekannte Bandtrocknungsanlagen arbeiten für gewöhnlich mit hoher Verfügbarkeit in einem sicheren Temperaturbereich. Sie lassen sich individuell an vorhandene Energiequellen (Dampf, Heißwasser, Thermoöl, Erdgas, Heizöl, Abwärmenutzung aus dem Betrieb von BHKW, Gasmotoren, Motorenabgase) anpassen, so dass zur Verfügung stehende Energie optimal genutzt werden kann. Soweit als Energiequelle auch Abgase zum Einsatz kommen sei hinsichtlich deren umweltverträglichen Aufbereitung vollumfänglich auf das in der DE 11 2011 100 511 A5 niedergelegte Reinigungsverfahren der Anmelderin hingewiesen.

Industrielle oder kommunale Schlammmaterialen, die in offenen Deponieteichen oder Klärwerken etc. anfallen, sind oft mit den unterschiedlichsten Fremdkörpern verunreinigt wie z.B. metallische Partikel, Steine, Haare, Borsten, Ohrstäbchen, Wurzeln, Holzstücke, Teile aus Kunststoff oder dergleichen mehr.

Soweit als zu trocknendes Gut solch ein Schlammmaterial zum Einsatz kommt ist bekannt, diese zunächst bis zur pastösen Konsistenz zu entwässern.

Des Weiteren sind beispielsweise aus der JP 2012-179591 A als Aufgabevorrichtung einer Bandtrocknungsanlage ausgebildete Einrichtungen zum Formen würstchenförmiger Formlinge aus pastösem Schlammmaterial bekannt, welche das vorentwässerte Schlammmaterial beispielsweise mit Hilfe eines Preßkörpers durch eine Lochmatrize pressen. Es entstehen dabei würstchenförmige Formlinge, die einem Bandtrockner zum Zwecke der effektiven Trocknung der würstchenförmigen Formlinge zugeführt werden.

Bei der Förderung bis zur pastösen Konsistenz entwässerten Schlammmaterials durch eine Lochmatrize besteht allerdings die Gefahr der Verstopfung einzelner Durchgangslöeher aufgrund der im Schlammmaterial gewöhnlich enthaltenen Fremdkörper. Dies ist auch dann der Fall, wenn das Schlammmaterial zuvor durch ein Sieb gepresst und von groben Fremdkörpern weitgehend befreit wurde, deren Abmessungen größer als der Durchmesser der Durchgangslöcher der Lochmatrize sind. Insbesondere Haare oder andere faserförmige Störstoffe wie Borsten, Kunststofffäden oder Holzfasern etc. werden häufig mit ihrem einen Ende durch ein anderes Durchgangsloch der Lochmatrize gedrückt als mit ihrem anderen Ende. Dies führt zu einer Querschnittverengung und anschließend zu einer Verstopfung der Durchgangslöcher mit der Folge, dass derartige Lochmatrizen häufig gereinigt werden müssen.

Zur Vermeidung bzw. Beseitigung derartiger Verstopfungen aufgrund faserförmiger Störstoffe ist beispielsweise aus der DE 40 13 760 C2 eine zweigeteilt ausgeführte Lochmatrize bekannt, wobei ein Oberteil der Lochmatrize als eine auf der Hauptfläche eines Grundteils aufliegenden Scherplatte ausgebildet ist, welche auf dem Grundteil der Matrize hin- und her verschiebbar angeordnet ist, so dass im Schlammmaterial enthaltene, sich an und in den Durchgangslöcher festsetzende faserförmiger Störstoffe abschert werden.

Die erwähnten Durchgangslöcher erstrecken sich sowohl durch das Grundteil wie auch die Scherplatte. Soweit auf eine solchermaßen zweigeteilt ausgebildete Lochmatrize jedoch grobe Fremdkörper treffen wie insb. Kronkorken, Steinchen oder vergleichbare nicht scherbare Fremdkörper, ist der Prozess zum Herstellen der würstchenformigen Formlinge nach wie vor zu unterbrechen. Die bekannte Einrichtung ist demnach auch nicht in der Lage, während der Beseitigung nicht scherbarer Fremdkörper weiterhin würstchenförmige Formlinge zu produzieren. Ein im wesentlich kontinuierlicher Arbeitsprozess ist damit nicht gesichert.

Des Weiteren wurden beispielsweise aus der JP 2003-227684 A oder der CN 103 623 745 A Aufgabevorrichtungen einer Bandtrocknungsanlage für ein bis zur pastösen Konsistenz entwässertes Deponie- oder Klärschlammmaterial bekannt, bei denen im Transportweg des Schlammmaterials wenigstens
- eine erste Walze mit gegenüber ihrem Außendurchmesser rückversetzten Querrillen, und
- wenigstens ein Führungsmittel so zum Außendurchmesser der ersten Walze, angeordnet sind, dass beim Drehen der ersten Walze das Schlammmaterial in die Querrillen eingezogen und zu länglichen Strangpresslingen ausgeformt wird.

Gegenüber Lochmatrizen, welche regelmäßig zu Verstopfen drohen, hat der Einsatz wenigstens einer Walze mit darin ausgebildeten Querrillen zum Vorteil, dass Störstoffe beim Querlegen über zwei oder mehr Querrillen durch Scherung zerkleinert und im Übrigen mitgerissen und wie anderen Fremdkörper im Strangpressling eingeschlossen werden.

Des Weiteren ist beispielsweise aus der DE 20 2010 007 475 U1 eine kombinierte Vorrichtung zur Trocknung von Schlämmen und anderen, pastösen Materialien, bekannt, bestehend aus einem Rillenwalzentrockner und einem nachgeschalteten Bandtrockner oder Trommeltrockner oder sonstigen Warmlufttrockner, wobei der Rillenwalzentrockner in ein isoliertes Gehäuse eingebaut ist und einer oder mehreren Prallstahltrocknungselementen (Röhren mit Düsen) zur zusätzlichen Warmlufttrocknung der in den Rillen von drei Seiten durch Kontakttrocknung getrockneten pastösen Masse ausgerüstet ist.

Basierend auf dem gleichen Prinzip offenbart auch die JP S60 9461 A die Durchführung des Trocknens der Extraktionsrückstände von Sojamilch durch Vortrocknen der Rückstände mittels einer gerillten Heiztrommel und Fertigtrocknen der vorgetrockneten Rückstände mit einem herkömmlichen Trockner.

Darüber hinaus offenbart die GB 786 692 A eine Walzenpressenanordnung für insbesondere mineralische Kohleschlämme zur Trennung der Flüssigkeit von den darin enthaltenen festen Materialien durch Komprimieren, zwecks anschließender Trocknungsbehandlung.

Schließlich sei noch auf die JP 2 881177 B2, die WO 2006/075920 A1, die CN 202 322 581 U sowie die DE 47 162 A1 hingewiesen.

Hiervon ausgehend liegt der vorliegenden Erfindung die Aufgabe zugrunde, eine verbesserte, die Nachteile des Standes der Technik vermeidende Aufgabevorrichtung einer Bandtrocknungsanlage für ein bis zur pastösen Konsistenz entwässertes Deponie- oder Klärschlammmaterial sowie ein Verfahren zum Steuern einer solchen Aufgabevorrichtung bereitzustellen.

Diese Aufgabe wird durch Bandtrocknungsanlage mit den Merkmalen des unabhängigen Patentanspruchs 1 sowie durch ein Verfahren zum Steuern einer solchen Bandtrocknungsanlage mit den Merkmalen des Patentanspruchs 13 gelöst.

Indem erfindungsgemäß, vorzugsweise unterhalb, der ersten Walze ein die Strangpresslinge aus den Querrillen auskehrender starrer Kamm zugeordnet ist, wird nicht nur der Austrag geformter Strangpresslinge entlang einer durch die Zähne definierten Eingriffslinie aus den Querrillen sichergestellt. Vielmehr wird durch die Abschrägung der Zahnenden unter einem Winkel α eine Schneidwirkung und durch die Anstellung der Zähne unter einem Winkel β zu einer die Eingriffslinie schneidenden Tangente der Walze eine Schälwirkung bezüglich der aus den Querrillen auszukehrenden Strangpresslinge erreicht. Der erfindungsgemäße Auskehrkamm bewirkt somit vorteilhaft zugleich eine Längung der Strangpresslinge auf eine bevorzugte Länge ein- oder mehrfach größer als deren durch die Querrillen gebildeten Querschnitt.

Vorteilhafte Aus- und Weiterbildungen, welche einzeln oder in Kombination miteinander eingesetzt werden können, sind Gegenstand der abhängigen Ansprüche.

In einer ersten Ausgestaltung der Erfindung haben sich insbesondere Schneidwirkung entfaltende Winkel α bewährt, welche zwischen 25° und 50°, insbesondere zwischen 30° und 45°, besonders bevorzugt zwischen 35° und 40°, groß sind.

In einer weiteren Ausgestaltung der Erfindung haben sich insbesondere Schälwirkung entfaltende Winkel β bewährt, welche zwischen 18° und 32°, insbesondere zwischen 21° und 29°, besonders bevorzugt zwischen 24° und 26°, groß sind.

In einer weiteren Ausgestaltung der Erfindung ist der Kamm in mehrere, jeweils bevorzugt sechs, sieben, acht oder neun Zähne umfassende, Segmente unterteilt, wobei diese Segmente in Axialrichtung der Walze, bevorzugt verschieblich, auf einem Querträger montiert sind. Durch die Unterteilung in Segmente kann der Eingriff der Zahnspitzen in die Querrillen vorteilhaft grundeingestellt und/oder nachjustiert werden.

In einer weiteren Ausgestaltung der Erfindung ist vorzugsweise das Führungsmittel eine Führungsplatte z.B. aus Blech- oder Kunststoff, oder eine zweite Führungs-Walze. Beide Alternativen realisieren vorteilhaft die Scherung insbesondere faserförmiger Störstoffe soweit erforderlich. Eine zweite Walze gestattet darüber hinaus vorteilhaft das Aufbringen variabler und/oder höherer Presskräfte auf das zu trocknende Schlammmaterial und darin erhaltener Fremdkörper. In einer Weiterbildung dessen ist bevorzugt, die eine (erste) Walze gegenüber der anderen (zweiten) Walze gegensinnig drehbar zu lagern, was vorteilhaft einen verbesserten Einzug des Schlammmaterials nebst darin enthaltener Fremdkörper bewirkt.

Alternativ oder kumulativ dazu ist bevorzugt, wenn die eine (erste) Walze gegenüber der anderen (zweiten) Walze eine höhere Drehgeschwindigkeit aufweist, was besser ein ggf. gebotenes Scheren faserförmiger Störstoffe an den Querrillen gewährleistet und/oder einen verbesserten Einschluss der Fremdstoffe in den Strangpresslingen zum Vorteil hat.

Erfindungsgemäß bevorzugt ferner ist, wenn auch die zweite Walze gegenüber ihrem Außendurchmesser rückversetze Querrillen aufweist. Dies gestattet vorteilhaft einerseits eine Anpassung der effektiven Rillengeometrie an verschiedene Schlammmaterialien und/oder den Abmessungen darin enthaltener Fremdkörper. Darüber hinaus ist mittels eines zweiten, wie im Kennzeichen von Anspruch 1 definierten, Auskehrkamms eine verdoppelte Belegung des Transportbandes der Bandtrocknungsanlage mit Strangpresslingen ermöglicht.

Insbesondere können die Querrillen beider Walzen zueinander versetzt oder einander gegenüberliegend ausgebildet sein, so dass effektiv im ersten Fall vorteilhaft ein fester erster (kleinerer) und im zweiten Fall ein fester zweiter (größerer) Rillenquerschnitt ausgebildet ist, wobei alternativ oder kumulativ dazu die eine Walze auch gegenüber der anderen Walze axial verschiebbar gelagert sein kann, so dass der sich aus beiden Walzen und ergebene effektive Rillenquerschnitt vorteilhaft variabel ausbildbar ist, was einen universelleren Einsatz der Anlage auch für wechselnde Schlammmaterialien und/oder unterschiedlich darin enthaltener Fremdkörper ermöglicht.

In einer weiteren Ausgestaltung der vorliegenden Erfindung ist vorgesehen, das Führungsmittel gegenüber der ersten Walze radial verschiebbar zu lagern. Dies hat zum Vorteil, dass bei drohender Blockierung des Transportweges T das Führungsmittel einen für eine drohende Blockade verantwortlichen Fremdkörper passieren lassen kann. Soweit aufgrund solch kurzfristiger Weitungen des Transportwegs T keine länglichen Strangpresslinge ausgeformt werden, kann vorgesehen sein, dieses Material nicht dem Bandtrockner zuzuführen sondern zuvor mittels einer geeigneten Ausbringvorrichtung (nicht dargestellt) auszubringen.

Die Walzen nebst den darin ausgebildeten Querrillen können als Drehteil gefertigt sein, womit jedoch mitunter hohe Fertigungskosten einhergehen. Erfindungsgemäß bevorzugt sind deshalb aus Segmentscheiben zweierlei Typs zusammengesetzte Walzen, wobei der Durchmesser der Segmentscheiben des ersten Typs den Außendurchmesser der Walzen und der Durchmesser der Segmentscheiben des zweiten Typs die dazu rückversetzten Querrillen bilden, wobei insbesondere Segmentscheiben bevorzugt sind, welche kostengünstig aus Hartgummi, aus Kunststoff mittels Spritzguss und/oder aus Metall mittels Laserschneiden herstellbar sind. Insbesondere der Aufbau der Walzen aus zwei verschiedenen sich abwechselnden Segmentscheiben ermöglicht schließlich in den Walzen preisgünstig Querrillen mit einer rechteckförmigen Geometrie auszubilden.

Unabhängig ob in einem Drehteil gefertigt oder aus Segmentscheiben gebildet umfassen Querrillen mit einer rechteckförmigen Geometrie gleich mehrere Vorteile:
- So gewährleisten die am Umfangsrand der Walzen liegenden Kanten eine Scherung von insbesondere querliegenden und/oder zu großen, die Rillengeometrie überragenden Fremdkörpern, also insbesondere ein Zerkleinern faserförmiger Störstoffe oder verform- oder scherbarer Fremdkörper, ohne dass dadurch nennenswerte Verstopfungen in der freien Fläche des Transportweges T auftreten.
- Darüber hinaus weisen rechteckförmige Querschnitte gegenüber runden (Lochscheiben) eine um etwa 27 % größere freie Durchtrittsfläche auf, was den Einschluss von Fremdkörpern und/oder Störstoffen in das Schlammmaterial erleichtert.
- Schließlich bilden rechteckförmige Querrillen rechteckförmige Strangpresslingen, welche gegenüber würstchenförmigen Formlingen nicht nur eine größere Trocknungsfläche aufweisen sondern seitlich auch leichter porös aufreißen und zu einem verbesserten Trocknungsverhalten insgesamt führen.

In einer weiteren bevorzugten Ausgestaltung hat sich bewährt, die Aufgabevorrichtung zu einem Transportband der Bandtrocknungsanlage dergestalt anzuordnen, dass die Eingriffslinie zum Transportband zwischen 20 bis 40 cm, insbesondere zwischen 25 und 35 cm, besonders bevorzugt 30 cm, zueinander beabstandet sind; wobei mittels dieser Fallhöhen die Form der Strangpresslinge vorteilhaft erhalten bleibt.

In der erfindungsgemäßen Ausgestaltung hat sich bewährt, mittels den Enden der starr in die Querrillen einer Walze eingreifenden Zähne durch abwechselnd unterschiedlich tiefen Eingriff zwei zueinander parallel versetzte Eingriffslinien auszubilden. Die Ausbildung zweier parallel zueinander versetzter Eingriffslinien hat die Vermeidung des Verbackens aus benachbarten Querrillen ausgekehrter Strangpresslinge zum Vorteil, insbesondere beim Einsatz von "weichem" Schlammmaterial.

Erfindungsgemäß bevorzugt schließlich ist die Drehzahl des Antriebsmotors einer jeden Walze einstellbar, bevorzugt mittels eines dem Motor zugeordneten Frequenzumrichters. Hintergrund dessen ist der Effekt, dass die Schneid- und Schälbarkeit der mittels Auskehrkamm aus den Querrillen auszukehrenden Strangpresslinge von der Scherfestigkeit des Deponie- oder Klärschlammmaterials abhängt. Die Stabilität von Schlämmen (und Böden) wird im Allgemeinen über die Scherfestigkeit definiert, da die Einheit Viskosität hier nicht zutreffend wäre. Der Scherwiderstand ist typischerweise mittels einer Flügelsonde messbar, insbesondere in Anlehnung an DIN 4096. Bei zu hohen Walzengeschwindigkeiten und "weichen" Schlämmen mit niedriger Schwerfestigkeit musste beobachtet werden, dass solche Schlämme zum Aufschieben beim Schneid- und Schälvorgangs neigen. D.h. die Strangpresslinge "weicher" Schlämme mit niedriger Scherfestigkeit werden bei hohen Walzengeschwindigkeiten durch den Auskehrkamm entsprechend verformt und es werden zu große Presskörper erzeugt, welche problematisch für den anschließenden Trocknungsvorgang sind. Die Einstellbarkeit der Drehzahl einer jeden Walze bietet hier Abhilfe. Gegenstand der vorliegenden Erfindung ist dazu zudem ein Verfahren zum Steuern einer Aufgabevorrichtung einer Bandtrocknungsanlage für ein bis zur pastösen Konsistenz entwässertes Deponie- oder Klärschlammmaterial, insbesondere wie zuvor beschrieben, umfassend die folgenden Schritte
- Erfassen der Scherfestigkeit des Schlammmaterials;
- Steuern der Drehzahl einer jeden Walze auf Basis der erfassten Scherfestigkeit des Schlammmaterials;
- wobei die Scherfestigkeit des Schlammanteils (60) bevorzugt mittels einer Flügelsonde erfasst wird und/oder wobei die Drehzahl einer jeden Walze bevorzugt mittels eines dem Antriebsmotor einer jeden Walze zugeordneten Frequenzumrichters gesteuert wird.

In einer Weiterbildung des Verfahrens hat sich ein Steuerungsverfahren bewährt,
- bei dem bei einer erfassten Scherfestigkeit zwischen 0,25 und 0,75 kN/cm² die Drehzahl wenigstens einer Walze zwischen 1,75 und 1,85 min⁻¹ beträgt;
- bei dem bei einer erfassten Scherfestigkeit zwischen 0,75 und 1,25 kN/cm² die Drehzahl wenigstens einer Walze zwischen 1,85 und 1,95 min⁻¹ beträgt;
- bei dem bei einer erfassten Scherfestigkeit zwischen 1,25 und 1,75 kN/cm² die Drehzahl wenigstens einer Walze zwischen 1,95 und 2,10 min⁻¹ beträgt;
- bei dem bei einer erfassten Scherfestigkeit zwischen 1,75 und 2,25 kN/cm² die Drehzahl wenigstens einer Walze zwischen 2,10 und 2,30 min⁻¹ beträgt;
- bei dem bei einer erfassten Scherfestigkeit zwischen 2,25 und 2,75 kN/cm² die Drehzahl wenigstens einer Walze zwischen 2,30 und 2,50 min⁻¹ beträgt;
- bei dem bei einer erfassten Scherfestigkeit zwischen 2,75 und 3,25 kN/cm² die Drehzahl wenigstens einer Walze zwischen 2,50 und 2,70 min⁻¹ beträgt;
- bei dem bei einer erfassten Scherfestigkeit zwischen 3,25 und 3,75 kN/cm² die Drehzahl wenigstens einer Walze zwischen 2,70 und 2,90 min⁻¹ beträgt;
- bei dem bei einer erfassten Scherfestigkeit zwischen 3,75 und 4,25 kN/cm² die Drehzahl wenigstens einer Walze zwischen 2,90 und 3,15 min⁻¹ beträgt;
- bei dem bei einer erfassten Scherfestigkeit zwischen 4,25 und 4,75 kN/cm² die Drehzahl wenigstens einer Walze zwischen 3,15 und 3,45 min⁻¹ beträgt;
- bei dem bei einer erfassten Scherfestigkeit zwischen 4,75 und 5,25 kN/cm² die Drehzahl wenigstens einer Walze zwischen 4,25 und 4,75 min⁻¹ beträgt;
- bei dem bei einer erfassten Scherfestigkeit zwischen 5,25 und 5,75 kN/cm² die Drehzahl wenigstens einer Walze zwischen 3,80 und 4,25 min⁻¹ beträgt;
- bei dem bei einer erfassten Scherfestigkeit zwischen 5,75 und 6,25 kN/cm² die Drehzahl wenigstens einer Walze zwischen 4,25 und 4,75 min⁻¹ beträgt;
- bei dem bei einer erfassten Scherfestigkeit zwischen 6,25 und 6,75 kN/cm² die Drehzahl wenigstens einer Walze zwischen 4,75 und 5,25 min⁻¹ beträgt;
- bei dem bei einer erfassten Scherfestigkeit zwischen 6,75 und 7,25 kN/cm² die Drehzahl wenigstens einer Walze zwischen 5,25 und 5,75 min⁻¹ beträgt;
- bei dem bei einer erfassten Scherfestigkeit zwischen 7,25 und 7,75 kN/cm² die Drehzahl wenigstens einer Walze zwischen 5,75 und 6,50 min⁻¹ beträgt; und/oder
- bei dem bei einer erfassten Scherfestigkeit zwischen 7,75 und 8,25 kN/cm² die Drehzahl wenigstens einer Walze zwischen 6,50 und 7,50 min⁻¹ beträgt.

Die vorliegende Erfindung hat zum Vorteil, dass Störstoffe beim Querlegen über zwei oder mehr Querrillen durch Scherung zerkleinert und im Übrigen mitgerissen und wie anderen Fremdkörper im Strangpressling eingeschlossen werden, welcher mittels dem Schneid- und Schälwirkung entfaltenden Auskehrkamm trocknungsgünstig gelängt unter Erzielung einer gleichmäßigen Transportbandbelegung der Bandtrocknungsanlage zuführbar ist. Das faktische Risiko von Stillstands-Zeiten einer Bandtrocknungsanlage aufgrund zyklisch erforderlicher Reinigung der Aufgabevorrichtung konnte damit vorteilhaft eliminiert, zumindest aber drastisch reduziert, werden.

Zusätzliche Einzelheiten und weitere Vorteile der Erfindung werden nachfolgend an Hand von Ausführungsbeispielen, auf welches die vorliegende Erfindung jedoch nicht beschränkt ist, sowie in Verbindung mit der beigefügten Zeichnung beschrieben.

### Darin zeigen schematisch:

- Fig. 1: eine typische Bandtrocknungsanlagen der Anmelderin;
- Fig. 2: ein erstes Ausführungsbeispiel einer Aufgabevorrichtung nach der Erfindung;
- Fig. 3: ein zweites Ausführungsbeispiel einer Aufgabevorrichtung nach der Erfindung;
- Fig. 4: ein drittes Ausführungsbeispiel einer Aufgabevorrichtung nach der Erfindung;
- Fig. 5: das Ausformen von Schlammmaterial in einer Aufgabevorrichtung nach der Erfindung zu Strangpresslingen und deren Aufgabe auf das Trocknungsband einer Bandtrocknungsanlage;
- Fig. 6: die auf einem Querträger, vorzugsweise längsverschiebbar, montierten Segmente eines Auskehrkamms;
- Fig. 7: den Auskehrkamm aus Fig. 6 unterhalb der rechten Walze eines Walzenpaares in einer perspektivischen Ansicht;
- Fig. 8: in einer Seitenansicht den zumindest eine Eingriffslinie definierenden Zahn eines Auskehrkamms mit zum Zahnhals und (durch die Tiefe der Querrillen definierten) Innendurchmesser der Walze hin abgeschrägtem Zahnende;
- Fig. 9: den Auskehrkamm analog Fig. 8 in einer Seitenansicht mit zwei, je eine Eingriffslinie definierenden, Zähne, gebildet durch wechselseitig unterschiedlich tief eingreifende Zahnenden;
- Fig. 10: zeigt in einer Seitenansicht den zumindest eine Eingriffslinie definierenden Zahn eines Auskehrkamms im Eingriff mit einer Querrille der linken Walze eines Walzenpaares mit zum Zahnhals und Außendurchmesser der Walze hin abgeschrägtem Zahnende; und
- Fig. 11: den Auskehrkamm analog Fig. 10 in einer Seitenansicht mit zwei, je eine Eingriffslinie definierenden, Zähne, gebildet durch wechselseitig unterschiedlich tief eingreifende Zahnenden.

Bei der nachfolgenden Beschreibung bevorzugter Ausführungsformen der vorliegenden Erfindung bezeichnen gleiche Bezugszeichen gleiche oder vergleichbare Komponenten.

Fig. 1 zeigt eine typische Bandtrocknungsanlage 1 der Anmelderin, wie diese in der obigen Beschreibungseinleitung bereits gewürdigt ist.

Fig. 2 zeigt ein erstes Ausführungsbeispiel einer erfindungsgemäßen Aufgabevorrichtung 10 einer Bandtrocknungsanlage 1, wobei Fig. 2a die Aufgabevorrichtung 10 in einer Seitenansicht und Fig. 2b die Aufgabevorrichtung 10 in einer Draufsicht zeigen. Wie in Fig. 2a ersichtlich ist die Aufgabevorrichtung 10 dabei so eingerichtet, dass im Transportweg T eines zu trocknenden Materials, insbesondere eines Schlammmaterials 60, eine erste Walze 11 mit gegenüber ihrem Außendurchmesser 15 rückversetzten Querrillen 14, und ein Führungsmittel 12 oder 13 angeordnet sind.

In der Ausgestaltung der Erfindung gemäß Fig. 2 ist das Führungsmittel vorzugsweise eine Führungsplatte 13 z.B. aus Blech- oder Kunststoff. Diese Platte 13 ist, beispielsweise mittels eines Federelements 19, so zum Außendurchmesser 15 der ersten Walze 11 angeordnet, dass beim Drehen der ersten Walze 11 (mittels einem Pfeil gekennzeichnet) das Schlammmaterial 60 in die Querrillen 14 eingezogen und zu länglichen Strangpresslingen 61 ausgeformt wird. Gegenüber bekannten Lochmatrizen, welche regelmäßig zu Verstopfen drohen, hat der erfindungsgemäße Einsatz wenigstens einer Walze 11 mit darin ausgebildeten Querrillen 14 zum Vorteil, dass Störstoffe beim Querlegen über zwei oder mehr Querrillen 14 durch Scherung zerkleinert und im Übrigen mitgerissen und wie andere Fremdkörper im Strangpressling 61 eingeschlossen werden.

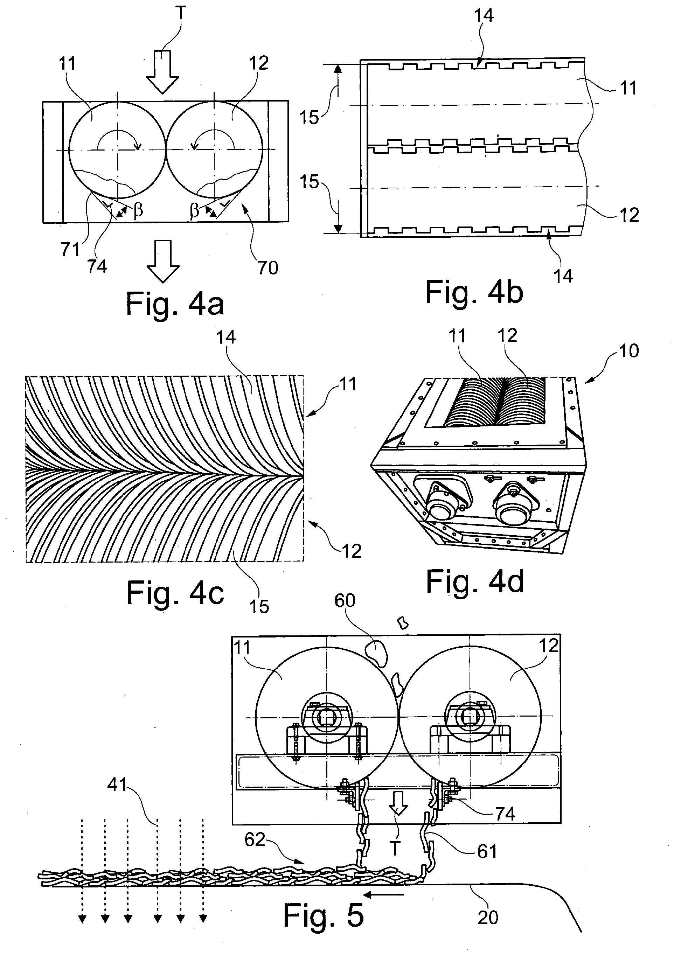

In den Ausgestaltungen der Erfindung gemäß Fig. 3 oder Fig. 4 ist das Führungsmittel vorzugsweise eine zweite (Führungs-)Walze 12. Beide Alternativen begünstigen vorteilhaft die Scherung insbesondere faserförmiger Störstoffe soweit erforderlich. Eine zweite (Führungs-)Walze 12 gestattet darüber hinaus vorteilhaft das Aufbringen variabler und/oder höherer Presskräfte auf das zu trocknende Schlammmaterial 60 und darin erhaltener Fremdkörper.

Fig. 3 zeigt das zweite Ausführungsbeispiel einer Aufgabevorrichtung nach der Erfindung; wobei Fig. 3a die Aufgabevorrichtung 10 in einer Seitenansicht und Fig. 3b die Aufgabevorrichtung 10 in einer Draufsicht zeigen. Wie mittels Pfeilen gekennzeichnet, ist bevorzugt, die eine (erste) Walze 11 gegenüber der anderen (zweiten) Walze 12 gegensinnig drehbar zu lagern, was vorteilhaft einen verbesserten Einzug des Schlammmaterials 60 nebst darin enthaltener Fremdkörper bewirkt.

Die beiden Walzen 11 und 12 können gleiche Drehgeschwindigkeiten aufweisen. Alternativ dazu kann eine Ausgestaltung bevorzugt sein, bei welcher die eine (erste) Walze 11 gegenüber der anderen (zweiten) Walze 12 eine höhere Drehgeschwindigkeit aufweist, was besser ein ggf. gebotenes Scheren faserförmiger Störstoffe an den Querrillen 14 gewährleistet und/oder einen verbesserten Einschluss der Fremdstoffe in den Strangpresslingen 61 zum Vorteil hat.

Wie Fig. 3b verdeutlich, weist bevorzugt auch die zweite Walze 12 gegenüber ihrem Außendurchmesser rückversetzte Querrillen 14 auf. Dies gestattet vorteilhaft eine Anpassung der effektiven Rillengeometrie an verschiedene Schlammmaterialien 60 und/oder den Abmessungen darin enthaltener Fremdkörper. Insbesondere können die Querrillen 14 beider Walzen 11 und 12 - wie in Fig. 3b dargestellt - einander gegenüberliegend ausgebildet sein, so dass effektiv in diesem Fall vorteilhaft ein fester maximal großer Rillenquerschnitt ausgebildet ist.

Fig. 4 zeigt ein drittes Ausführungsbeispiel einer Aufgabevorrichtung nach der Erfindung; wobei Fig. 4a die Aufgabevorrichtung 10 in einer Seitenansicht und Fig. 4b die Aufgabevorrichtung 10 in einer Draufsicht zeigen. Was Fig. 4a anbelangt, sei auf die Ausführungen zu Fig. 3a verwiesen. Gegenüber der Ausgestaltung in Fig. 3b verdeutlicht Fig. 4b, wie die Querrillen 14 beider Walzen 11 und 12 zueinander versetzt ausgebildet sein können, so dass effektiv im diesem Fall vorteilhaft ein fester erster minimal kleiner Rillenquerschnitt, von beispielsweise 10 mm Durchmesser oder bei den unten beschriebenen rechteckförmigen Rillen 14 von beispielsweise etwa 10 x 10 mm, ausgebildet ist.

Alternativ oder kumulativ dazu kann die eine Walze 11 oder 12 auch gegenüber der anderen Walze 12 oder 11 axial verschiebbar gelagert sein, so dass der sich aus beiden Walzen 11 und 12 ergebene effektive Rillenquerschnitt, von beispielsweise etwa 10 mm x 20 mm bei Rechteckform, vorteilhaft variabel - zum einen wie in Fig. 3 und zum anderen wie in Fig. 4 dargestellt und beschrieben - ausbildbar ist, was einen universelleren Einsatz der Anlage 1 auch für wechselnde Schlammmaterialien 60 und/oder unterschiedlich darin enthaltener Fremdkörper ermöglicht.

Fig. 4c zeigt das Walzenpaar 11 und 12 aus Fig. 4b in einer perspektivischen Teilansicht; Fig. 4d im Gehäuse einer Aufgabevorrichtung 10 einer Bandtrocknungsanlage 1. Als Größe bzw. Durchmesser der Walzen 11 und 12 wurden bevorzugt Größen von 300 mm +/- 50 mm gewählt. Diese Dimensionierungen erwiesen sich als günstiger Kompromiss zwischen Einzugssicherheit des zu trocknenden Materials 60 (größere Walzen 11 bzw. 12 ziehen besser ein) und dem transportablen Gesamtgewicht und den Kosten einer Aufgabevorrichtung 10 nach der Erfindung. Insbesondere wurde eine Walze 11 fest und die zweite Walze 12 verstellbar gelagert, so dass der Spalt zwischen beiden Walzen 11 und 12 verstellt werden kann. Beide Walzen 11 und 12 wurden ferner bevorzugt mit jeweils einem Getriebemotor angetrieben. Der Einsatz von Getriebemotoren hat gegenüber hydraulisch angetriebener Axialkolbenmotoren zum Vorteil, dass keine zusätzlichen Hydraulikaggregate das System verteuern. Zudem kann ein Antriebsmotor gewählt werden, der bevorzugt mittels Frequenzumrichter drehzahlverstellbar ist, wodurch vorteilhaft eine stufenlose Verstellung der Walzendrehzahl in einem weiten Bereich ermöglich ist, was für Einstellungen während des Betriebes wichtig sein kann. Hintergrund dessen ist der Effekt, dass die Schneid- und Schälbarkeit der mittels Auskehrkamm 70 aus den Querrillen 14 auszukehrenden Strangpresslinge 61 von der Scherfestigkeit des Deponie- oder Klärschlammmaterials 60 abhängt. Die Stabilität von Schlämmen (und Böden) wird im Allgemeinen über die Scherfestigkeit definiert, da die Einheit Viskosität hier nicht zutreffend wäre. Der Scherwiderstand ist mittels einer, bevorzugt im Transportweg T des Schlammmaterials 60, angeordneten Flügelsonde (nicht dargestellt) messbar, insbesondere in Anlehnung an DIN 4096. Bei zu hohen Walzengeschwindigkeiten und "weichen" Schlämmen 60 mit niedriger Festigkeit musste beobachtet werden, dass solche Schlämme 60 zum Aufschieben beim Schneid- und Schälvorgangs neigen. D.h. die Strangpresslinge 61 "weicher" Schlämme 60 mit niedriger Scherfestigkeit, bei Messung mittels einer Flügelsonde auch als Flügelscherfestigkeit bezeichnet, werden bei hohen Walzengeschwindigkeiten durch den Auskehrkamm 70 entsprechend verformt und es werden zu große Presskörper erzeugt, welche problematisch für den anschließenden Trocknungsvorgang sind. Dementsprechend wurde die Bedeutung der Umlauf- bzw. Umfangsgeschwindigkeit beim Einzug von Aufgabematerial wie folgt bevorzugt festgelegt:

| Flügelscherfestigkeit kN/cm² | Walzendrehzahl 1 / min | Umfangsgeschwindigkeit m / s |
|---|---|---|
| 0,5 | 1,80 | 0,030 |
| 1,0 | 1,90 | 0,032 |
| 1,5 | 2,00 | 0,033 |
| 2,0 | 2,20 | 0,037 |
| 2,5 | 2,40 | 0,040 |
| 3,0 | 2,60 | 0,043 |
| 3,5 | 2,80 | 0,047 |
| 4,0 | 3,00 | 0,050 |
| 4,5 | 3,30 | 0,055 |
| 5,0 | 3,60 | 0,060 |
| 5,5 | 4,00 | 0,067 |
| 6,0 | 4,50 | 0,075 |
| 6,5 | 5,00 | 0,083 |
| 7,0 | 5,50 | 0,092 |
| 7,5 | 6,00 | 0,100 |
| 8,0 | 7,00 | 0,117 |

Schließlich können Frequenzumrichter bezüglich erhöhter Stromaufnahme relativ genau eingestellt werden, damit bei Stillstand der Walzen 11 und 12 aufgrund Fehlfunktion oder Wartung, gleichzeitig eine Rotations-Überwachung die Maschine abstellt und eine Störungsanzeige auslöst.

In einer weiteren Ausgestaltung der vorliegenden Erfindung ist vorgesehen, die Führungsmittel 12 oder 13 gegenüber der ersten Walze 11 radial verschiebbar zu lagern - wie dies beispielsweise in Fig. 2a mit Hilfe von Federelementen 19 realisiert ist, so dass auch der gelegentliche Einzug größerer Klumpen nicht zu unerwünschten Stillstandszeiten der Anlagen 1 führt. Vielmehr kann so bei drohender Blockierung des Transportweges T das Führungsmittel 12 oder 13 einen für eine drohende Blockade verantwortlichen Fremdkörper durch kurzfristige Weitung des Transportwegs T passieren lassen kann. Soweit aufgrund solcher Weitungen keine länglichen Strangpresslinge 61 ausgeformt werden, kann vorgesehen sein, dieses Material nicht dem Bandtrockner 1 zuzuführen sondern zuvor mittels einer geeigneten Ausbringvorrichtung (nicht dargestellt) aus dem Transportweg T auszubringen.

Alternativ dazu kann der Aufgabevorrichtung 10 auch eine (nicht dargestellte) Vorrichtung zur Vorzerkleinerung des Aufgabematerials 60 vorgelagert sein, welcher beispielsweise Klumpen größer 40 mm oder 50 mm auf unter 30 mm oder 20 mm verkleinert.

Fig. 5 zeigt das Ausformen von Schlammmaterial 60 in einer Aufgabevorrichtung 10 nach der Erfindung zu Strangpresslingen 61 und deren Aufgabe auf das Trocknungsband 20 einer Bandtrocknungsanlage 1. Erkennbar ist wie, insbesondere unterhalb, einer jeden Walze 11 und 12 ein die Strangpresslinge 61 aus den Querrillen 14 auskehrender Kamm 70 angeordnet ist.

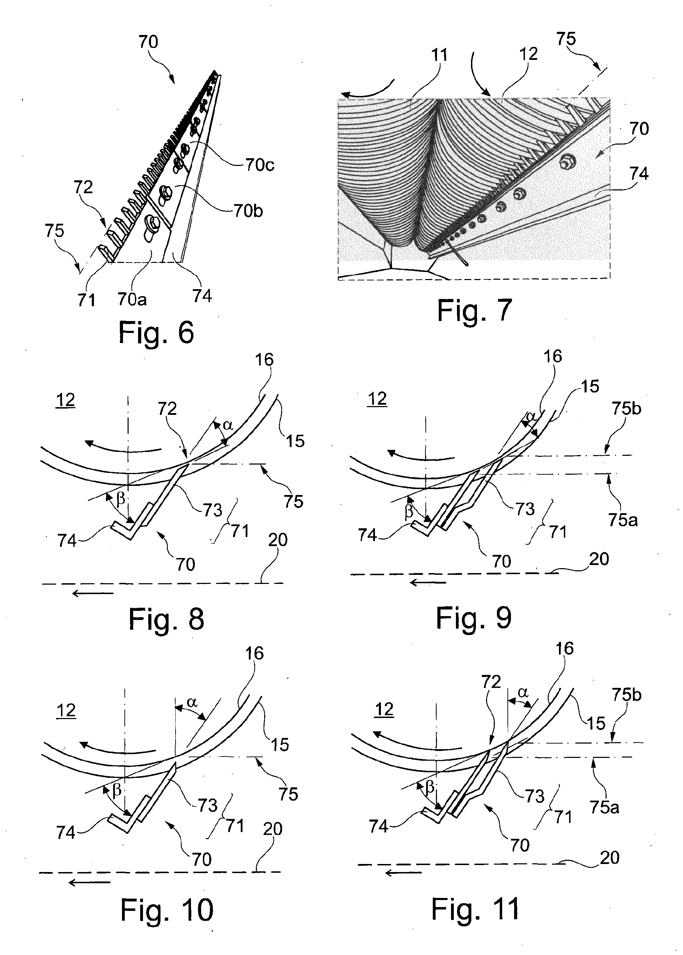

Fig. 6 zeigt die auf einem Querträger 74, vorzugsweise längsverschiebbar, montierten Segmente 70a, 70b, 70c, ... eines Auskehrkamms 70. Erkennbar zudem ist, wie die Enden 72 der Zähne 71 eine Eingriffslinie 75 definieren.

Fig. 7 zeigt den Auskehrkamm 70 aus Fig. 6 unterhalb der rechten Walze 12 eines Walzenpaares 11 und 12 in einer perspektivischen Ansicht. Erkennbar des Weiteren ist, wie die eine Eingriffslinie 75 definierenden Enden 72 der Zähne 71 starr in die Querrillen 14 der Walze 12 eingreifen.

Fig. 8 zeigt in einer Seitenansicht den zumindest eine Eingriffslinie 75 definierenden Zahn 71 eines Auskehrkamms 70 im Eingriff mit einer Querrille 14 der linken Walze 11 eines Walzenpaares 11, 12 mit zum Zahnhals 73 und (durch die Tiefe der Querrillen 14 definierten) Innendurchmesser der Walze 11 hin abgeschrägtem Zahnende 72.

Fig. 9 zeigt den Auskehrkamm 70 analog Fig. 8 in einer Seitenansicht mit zwei, je eine Eingriffslinie 75a und 75b definierenden, Zähnen 71, gebildet durch wechselseitig unterschiedlich tief eingreifende Zahnenden 72. Die Ausbildung zweier paralleler, beispielsweise um mindestens zwei bis ggf. sechs Zentimeter zueinander versetzter, Eingriffslinien 75a und 75b hat die Vermeidung des Verbackens aus benachbarten Querrillen 14 ausgekehrter Strangpresslinge 61 aus insbesondere "weichem" Schlammmaterial zum Vorteil.

Fig. 10 zeigt in einer Seitenansicht den zumindest eine Eingriffslinie 75 definierenden Zahn 71 eines Auskehrkamms 70 im Eingriff mit einer Querrille 14 der linken Walze 11 eines Walzenpaares 11, 12 mit zum Zahnhals 73 und Außendurchmesser 15 der Walze 11 hin abgeschrägtem Zahnende 72.

Fig. 11 schließlich zeigt den Auskehrkamm 70 analog Fig. 10 in einer Seitenansicht mit zwei, je eine Eingriffslinie 75a und 75b definierenden, Zähnen 71, gebildet durch wechselseitig unterschiedlich tief eingreifende Zahnenden 72.

Die beispielhaft in den Fig. 6 bis 11 dargestellten Auskehrkämme 70 stellen nicht nur den Austrag geformter Strangpresslinge 61 aus den Querrillen 14 sicher; sie können vorteilhaft zugleich eine Längung der Strangpresslinge 61 auf eine bevorzugte Länge ein- oder mehrfach größer als deren durch die Querrillen 14 gebildeten Querschnitt bewirken. In den Figuren 6 bis 11 ferner dargestellt ist, wie die Aufgabevorrichtung 10 zu einem Transportband 20 der Bandtrocknungsanlage 1 dergestalt angeordnet ist, dass die Eingriffslinie 75 bzw. die Eingriffslinien 75a und 75b zum Transportband 20 zwischen 20 bis 40 cm, insbesondere zwischen 25 und 35 cm, besonders bevorzugt um die 30 cm, zueinander beabstandet sind; wobei mittels dieser Fallhöhen die Form der Strangpresslinge 61 vorteilhaft erhalten bleibt.

Die Walzen 11 und/oder 12 nebst den darin ausgebildeten Querrillen 14 können als Drehteil gefertigt sein, womit jedoch mitunter hohe Fertigungskosten einhergehen können. Erfindungsgemäß bevorzugt sind deshalb aus Segmentscheiben 16, 17 zweierlei Typs zusammengesetzte Walzen 11 bzw. 12, wie dies in Fig. 2b dargestellt ist. Erkennbar ist, wie der Durchmesser der Segmentscheiben 17 eines ersten Typs den Außendurchmesser 15 der Walzen 11 bzw. 12 und der Durchmesser der Segmentscheiben 16 eines zweiten Typs die dazu rückversetzten Querrillen 14 bilden. Die in Fig. 2b dargestellten Segmentscheiben 16 und 17 können kostengünstig aus Hartgummi, aus Kunststoff mittels Spritzguss und/oder aus Metall mittels Laserschneiden herstellbar sein. Sie sind abwechselnd, beispielsweise auf einen Achszapfen 18, aufgezogen und bieten so die einfache Ausbildung von Walzen 11 und/oder 12 in einer variablen, der jeweiligen Anwendung genügenden Länge.

Insbesondere der Aufbau der Walzen 11 und 12 aus zwei verschiedenen sich abwechselnden Segmentscheiben 16 und 17 ermöglicht schließlich in den Walzen 11 und 12 preisgünstig Querrillen 14 mit einer rechteckförmigen Geometrie auszubilden.

Dabei erwies sich die Einschränkung, dass die Stirnseiten kostengünstiger Scheiben 16 und 17 flach sind keine bestimmte, insbesondere würstchenförmige Formgebung der Presslinge ermöglichen, nicht als Nachteil. Querrillen 14 mit einer rechteckförmigen Geometrie umfassen nämlich gleich mehrere Vorteile:
- So gewährleisten die am Umfangsrand 15 der Walzen 11 bzw. 12 liegenden Kanten eine Scherung von insbesondere querliegenden und/oder zu großen, die Rillengeometrie überragenden Fremdkörpern, also insbesondere ein Zerkleinern faserförmiger Störstoffe oder verform- oder scherbarer Fremdkörper, ohne dass dadurch nennenswerte Verstopfungen in der freien Fläche des Transportweges T auftreten.
- Darüber hinaus weisen rechteckförmige Querschnitte 14 gegenüber runden (Lochscheiben) eine um etwa 27 % größere freie Durchtrittsfläche auf, was den Einschluss von Fremdkörpern und/oder Störstoffen in das Schlammmaterial 60 erleichtert.
- Schließlich bilden rechteckförmige Querrillen 14 rechteckförmige Strangpresslingen 61, welche gegenüber würstchenförmigen Formlingen nicht nur eine größere Trocknungsfläche aufweisen sondern seitlich auch leichter porös aufreißen und zu einem verbesserten Trocknungsverhalten insgesamt führen. Insbesondere zeigte sich in Laborversuchen, dass der Strömungsverlust von Warmluft 41 durchströmten rechteckigen, gegenüber runden, Formlingen bei einer Luftgeschwindigkeit von 1,5 m/s, nicht messbar höher war.

Die vorliegende Erfindung hat zum Vorteil, dass Störstoffe beim Querlegen über zwei oder mehr Querrillen 14 durch Scherung zerkleinert und im Übrigen mitgerissen und wie anderen Fremdkörper im Strangpressling 61 eingeschlossen werden. Das faktische Risiko von Stillstands-Zeiten einer Bandtrocknungsanlage 1 aufgrund zyklisch erforderlicher Reinigung der Aufgabevorrichtung 10 konnte damit vorteilhaft eliminiert, zumindest aber drastisch reduziert, werden.

### Bezugszeichenliste

- 1: Bandtrocknungsanlage

- 10: Aufgabevorrichtung
- 11: erste Walze
- 12: Führungswalze
- 13: Führungsplatte
- 14: in den Walzen 11 und 12 ausgebildete Querrillen
- 15: Außendurchmesser der Walzen
- 16: Rillensegment
- 17: Walzensegment
- 18: Achszapfen
- 19: Federelement

- 20: Transportband

- 30: Trocknungszone
- 31: erste Trocknungskammer
- 32: zweite Trocknungskammer
- 33: dritte Trocknungskammer
- 34: vierte Trocknungskammer

- 40: Lüftungssystem
- 41: Warmluft
- 42: Abluftgebläse

- 50: Wärmetauscher

- 60: zu trocknendes Material, z.B. Deponie- oder Klärschlämme
- 61: Strangpresslinge
- 62: Haufwerk
- 63: Trockengut

- 70: Auskehrkamm
- 70a, 70b, ...: Segmente des Auskehrkamms 70
- 71: Zähne des Auskehrkamms 70
- 72: Zahnenden
- 73: Zahnhals
- 74: Querträger
- 75, 75a, 75b: Eingriffslinie(n)

- 80: zuführende Fördereinrichtung
- 81: Dosiereinrichtung
- 82: abführende Fördereinrichtung

- T: Transportweg

## Patentansprüche

1. Aufgabevorrichtung (10) einer Bandtrocknungsanlage (1) für ein bis zur pastösen Konsistenz entwässertes Deponie- oder Klärschlammmaterial (60),
wobei im Transportweg (T) des Schlammmaterials (60) wenigstens
- eine erste Walze (11) mit gegenüber ihrem Außendurchmesser (15) rückversetzten Querrillen (14), und
- ein Führungsmittel (12; 13) so zum Außendurchmesser (15) der ersten Walze (11),
angeordnet sind, dass beim Drehen der ersten Walze (11) das Schlammmaterial (60) in die Querrillen (14) eingezogen und zu länglichen Strangpresslingen (61) ausgeformt wird;
**dadurch gekennzeichnet,**
- **dass** der ersten Walze (11, 12) ein die Strangpresslinge (61) aus den Querrillen (14) auskehrender Kamm (70) mit starr in die Querrillen (14) eingreifenden Zähnen (71) zugeordnet ist;
- **dass** die Enden (72) der starr in die Querrillen (14) eingreifenden Zähne (71) zumindest eine Eingriffslinie (75) definieren;
- **dass** die starr in die Querrillen (14) eingreifenden Zahnenden (72) zum Zahnhals (73) und Außendurchmesser (15) der Walze (11) hin unter einem, eine Schneidwirkung entfaltenden, Winkel α abgeschrägt sind; und
- **dass** die Zähne (71) des Kammes (70) unter einem, eine Schälwirkung entfaltenden, Winkel β zu einer die Eingriffslinie (75) schneidenden Tangente der Walze (11) angeordnet sind.

2. Aufgabevorrichtung (10) nach Anspruch 1, **dadurch gekennzeichnet, dass** der Schneidwirkung entfaltende Winkel α zwischen 25° und 50°, insbesondere zwischen 30° und 45°, besonders bevorzugt zwischen 35° und 40°, groß ist.

3. Aufgabevorrichtung (10) nach Anspruch 1 oder 2, **dadurch gekennzeichnet, dass** der Schälwirkung entfaltende Winkel β zwischen 18° und 32°, insbesondere zwischen 21° und 29°, besonders bevorzugt zwischen 24° und 26°, groß ist.

4. Aufgabevorrichtung (10) nach einem der Ansprüche 1 bis 3, **dadurch gekennzeichnet, dass** der Kamm (70) in mehrere, jeweils bevorzugt sechs, sieben, acht oder neun Zähne umfassende, Segmente (70a, 70b, 70c, ...) unterteilt ist und diese Segmente (70a, 70b, 70c, ...) in Axialrichtung der Walze (12), bevorzugt verschieblich, auf einem Querträger (74) montiert sind.

5. Aufgabevorrichtung (10) nach einem der vorherigen Ansprüche, **dadurch gekennzeichnet, dass** das Führungsmittel
- eine Führungsplatte (13) oder
- eine zweite Walze (12) ist, welche zur ersten Walze (11) gegensinnig drehbar gelagert ist.

6. Aufgabevorrichtung (10) nach Anspruch 5, **dadurch gekennzeichnet, dass** die eine Walze (11, 12) gegenüber der anderen Walze (12, 11) eine höhere Drehgeschwindigkeit aufweist.

7. Aufgabevorrichtung (10) nach Anspruch 5 oder 6, wobei auch die zweite Walze (12) gegenüber ihrem Außendurchmesser rückversetzte Querrillen (14) aufweist, **dadurch gekennzeichnet,**
- **dass** auch der zweiten Walze (11, 12) ein die Strangpresslinge (61) aus den Querrillen (14) auskehrender Kamm (70) mit starr in die Querrillen (14) eingreifenden Zähnen (71) zugeordnet ist;
- **dass** die Enden (72) der starr in die Querrillen (14) eingreifenden Zähne (71) zumindest eine Eingriffslinie (75) definieren;
- **dass** die starr in die Querrillen (14) eingreifenden Zahnenden (72) zum Zahnhals (73) und Außendurchmesser (15) der Walze (11) hin unter einem, eine Schneidwirkung entfaltenden, Winkel α abgeschrägt sind; und
- **dass** die Zähne (71) des Kammes (70) unter einem, eine Schälwirkung entfaltenden, Winkel β zu einer die Eingriffslinie (75) schneidenden Tangente der Walze (11) angeordnet sind.

8. Aufgabevorrichtung (10) nach Anspruch 7, **dadurch gekennzeichnet, dass** die Querrillen (14) beider Walzen (11, 12) zueinander versetzt oder einander gegenüberliegend ausgebildet sind, wozu die eine Walze (11, 12) gegenüber der anderen Walze (12, 11) vorzugsweise axial verschiebbar gelagert ist.

9. Aufgabevorrichtung (10) nach einem der vorherigen Ansprüche, **dadurch gekennzeichnet, dass** das Führungsmittel (12; 13) gegenüber der ersten Walze (11) radial verschiebbar gelagert ist.

10. Aufgabevorrichtung (10) nach einem der vorherigen Ansprüche, **dadurch gekennzeichnet, dass** die Walzen (11, 12) aus Segmentscheiben (16, 17) zusammengesetzt sind, welche bevorzugt aus Hartgummi, aus Kunststoff mittels Spritzguss und/oder aus Metall mittels Laserschneiden hergestellt sind.

11. Aufgabevorrichtung (10) nach einem der vorherigen Ansprüche, **dadurch gekennzeichnet, dass** die Querrillen (14) in den Walzen (11, 12) eine Rechteckform aufweisen.

12. Aufgabevorrichtung (10) nach einem der vorherigen Ansprüche, **dadurch gekennzeichnet, dass** die Aufgabevorrichtung (10) zu einem Transportband (20) der Bandtrocknungsanlage (1) dergestalt angeordnet ist, dass die zumindest eine Eingriffslinie (75) zum Transportband (20) zwischen 20 und 40 cm, insbesondere zwischen 25 und 35 cm, besonders bevorzugt 30 cm, zueinander beabstandet sind.

13. Aufgabevorrichtung (10) nach einem der vorherigen Ansprüche, **dadurch gekennzeichnet, dass** die Enden (71) der starr in die Querrillen (14) einer Walze (11, 12) eingreifenden Zähne (71) durch abwechselnd unterschiedlich tiefen Eingriff zwei zueinander parallel versetzte Eingriffslinien (75a, 75b) ausbilden.

14. Verfahren zum Steuern einer Aufgabevorrichtung (10) einer Bandtrocknungsanlage (1) für ein bis zur pastösen Konsistenz entwässertes Deponie- oder Klärschlammmaterial (60) nach einem der vorherigen Ansprüche, umfassend die folgenden Schritte:
- Erfassen der Scherfestigkeit des Schlammmaterials (60); bevorzugt mittels einer Flügelsonde;
- Steuern der Drehzahl einer jeden Walze (11, 12) auf Basis der erfassten Scherfestigkeit des Schlammmaterials (60); bevorzugt mittels eines dem Antriebsmotor einer jeden Walze (11, 12) zugeordneten Frequenzumrichters.

15. Verfahren nach Anspruch 14,
- bei dem bei einer erfassten Scherfestigkeit zwischen 0,25 und 0,75 kN/cm² die Drehzahl wenigstens einer Walze (11, 12) zwischen 1,75 und 1,85 min⁻¹ beträgt;
- bei dem bei einer erfassten Scherfestigkeit zwischen 0,75 und 1,25 kN/cm² die Drehzahl wenigstens einer Walze (11, 12) zwischen 1,85 und 1,95 min⁻¹ beträgt;
- bei dem bei einer erfassten Scherfestigkeit zwischen 1,25 und 1,75 kN/cm² die Drehzahl wenigstens einer Walze (11, 12) zwischen 1,95 und 2,10 min⁻¹ beträgt;
- bei dem bei einer erfassten Scherfestigkeit zwischen 1,75 und 2,25 kN/cm² die Drehzahl wenigstens einer Walze (11, 12) zwischen 2,10 und 2,30 min⁻¹ beträgt;
- bei dem bei einer erfassten Scherfestigkeit zwischen 2,25 und 2,75 kN/cm² die Drehzahl wenigstens einer Walze (11, 12) zwischen 2,30 und 2,50 min⁻¹ beträgt;
- bei dem bei einer erfassten Scherfestigkeit zwischen 2,75 und 3,25 kN/cm² die Drehzahl wenigstens einer Walze (11, 12) zwischen 2,50 und 2,70 min⁻¹ beträgt;
- bei dem bei einer erfassten Scherfestigkeit zwischen 3,25 und 3,75 kN/cm² die Drehzahl wenigstens einer Walze (11, 12) zwischen 2,70 und 2,90 min⁻¹ beträgt;
- bei dem bei einer erfassten Scherfestigkeit zwischen 3,75 und 4,25 kN/cm² die Drehzahl wenigstens einer Walze (11, 12) zwischen 2,90 und 3,15 min⁻¹ beträgt;
- bei dem bei einer erfassten Scherfestigkeit zwischen 4,25 und 4,75 kN/cm² die Drehzahl wenigstens einer Walze (11, 12) zwischen 3,15 und 3,45 min⁻¹ beträgt;
- bei dem bei einer erfassten Scherfestigkeit zwischen 4,75 und 5,25 kN/cm² die Drehzahl wenigstens einer Walze (11, 12) zwischen 4,25 und 4,75 min⁻¹ beträgt;
- bei dem bei einer erfassten Scherfestigkeit zwischen 5,25 und 5,75 kN/cm² die Drehzahl wenigstens einer Walze (11, 12) zwischen 3,80 und 4,25 min⁻¹ beträgt;
- bei dem bei einer erfassten Scherfestigkeit zwischen 5,75 und 6,25 kN/cm² die Drehzahl wenigstens einer Walze (11, 12) zwischen 4,25 und 4,75 min⁻¹ beträgt;
- bei dem bei einer erfassten Scherfestigkeit zwischen 6,25 und 6,75 kN/cm² die Drehzahl wenigstens einer Walze (11, 12) zwischen 4,75 und 5,25 min⁻¹ beträgt;
- bei dem bei einer erfassten Scherfestigkeit zwischen 6,75 und 7,25 kN/cm² die Drehzahl wenigstens einer Walze (11, 12) zwischen 5,25 und 5,75 min⁻¹ beträgt;
- bei dem bei einer erfassten Scherfestigkeit zwischen 7,25 und 7,75 kN/cm² die Drehzahl wenigstens einer Walze (11, 12) zwischen 5,75 und 6,50 min⁻¹ beträgt; und/oder
- bei dem bei einer erfassten Scherfestigkeit zwischen 7,75 und 8,25 kN/cm² die Drehzahl wenigstens einer Walze (11, 12) zwischen 6,50 und 7,50 min⁻¹ beträgt.

## Claims

1. A feeding device (10) of a belt drying installation (1) for dump or sewage sludge material (60) that has been dewatered to a pasty consistency,
at which - within the transportation path (T) of the sludge material (60) - at least
- one first roller (11) with transverse grooves (14) which are set back with respect to its external diameter (15), and
- a guide means (12; 13)
are disposed with respect to the external diameter (15) of said first roller (11)
in such a way that when the first roller (11) is rotated, the sludge material (60) is drawn into the transverse grooves (14) and molded into elongate extruded pressings (61);
**characterized in that**
- a comb (70) is assigned to said first roller (11), which has teeth (71) that engage in a rigid manner in the transverse grooves (14) and which sweeps the extruded pressings (61) from the transverse grooves (14);
- the ends (72) of the teeth (71) that engage in a rigid manner in the transverse grooves (14) define at least one line of engagement (75);
- the ends (72) of the teeth (71) that engage in a rigid manner in the transverse grooves (14) are beveled toward the tooth neck (73) and the external diameter (15) of said roller (11) at an angle α causing a cutting effect; and
- the teeth (71) of the comb (70) are arranged at an angle β with respect to a tangent of said roller (11) that intersects the line of engagement (75), said angle β causing a stripping effect.

2. The feeding device (10) according to claim 1, **characterized in that** the angle α causing a cutting effect is between 25° and 50°, in particular between 30° and 45°, particularly preferably between 35° and 40°.

3. The feeding device (10) according to claim 1 or 2, **characterized in that** the angle β causing a stripping effect is between 18° and 32°, in particular between 21° and 29°, particularly preferably between 24° and 26°.

4. The feeding device (10) according to one of claims 1 to 3, **characterized in that** the comb (70) is subdivided into a plurality of segments (70a, 70b, 70c, ...) each of which preferably comprising six, seven, eight or nine teeth, and said segments (70a, 70b, 70c, ...) are fitted to a traverse support (74) in the axial direction of the roller (12), preferably so as to be displaceable.

5. The feeding device (10) according to one of the preceding claims, **characterized in that** the guiding means is
- a guide plate (13), or
- a second roller (12) which is mounted rotatably in opposite rotation direction to the first roller (11).

6. The feeding device (10) according to claim 5, **characterized in that** the one roller (11, 12) has a higher rotational speed than the other roller (12, 11) .

7. The feeding device (10) according to claim 5 or 6, at which also the second roller (12) has transverse grooves (14) that are set back in relation to the external diameter of said second roller (12), **characterized in that**
- a comb (70), which has teeth (71) that engage in a rigid manner in the transverse grooves (14) and which sweeps the extruded pressings (61) from the transverse grooves (14) is also assigned to the second roller (11, 12) ;
- the ends (72) of the teeth (71) that engage in a rigid manner in the transverse grooves (14) define at least one line of engagement (75);
- the tooth ends (72) that engage in a rigid manner in the transverse grooves (14) toward the tooth neck (73) and the external diameter (15) of the roller (11) are beveled at an angle α that causes a cutting effect; and
- the teeth (71) of the comb (70) are disposed at an angle β relative to a tangent that intersects the line of engagement (75) of the roller (11), said angle β causing a stripping effect.

8. The feeding device (10) according to claim 7, **characterized in that** the transverse grooves (14) of both rollers (11, 12) are configured so as to be mutually offset or as to lie mutually opposite one another, for which purpose the one roller (11, 12) is mounted displaceable with respect to the other roller (12, 11), preferably displaceable in an axial manner.

9. The feeding device (10) according to one of the preceding claims, **characterized in that** the guiding means (12; 13) is mounted so as to be radially displaceable in relation to the first roller (11).

10. The feeding device (10) according to one of the preceding claims, **characterized in that** the rollers (11, 12) are assembled from segment discs (16, 17) which are preferably produced from hard rubber, from plastic by means of injection molding, and/or from metal by means of laser cutting.

11. The feeding device (10) according to one of the preceding claims, **characterized in that** the transverse grooves (14) within the rollers (11, 12) have a rectangular shape.

12. The feeding device (10) according to one of the preceding claims, **characterized in that** the feeding device (10) is disposed relative to a transportation belt (20) of the belt drying installation (1) in such a way that the at least one line of engagement (75) is spaced apart from the transportation belt (20) by between 20 and 40 cm, in particular between 25 and 35 cm, particularly preferably 30 cm.

13. The feeding device (10) as claimed in one of the preceding claims, **characterized in that** the ends (72) of the teeth (71) that engage in a rigid manner in the transverse grooves (14) of a roller (11, 12) form two lines of engagement (75a, 75b) that are mutually offset in a parallel manner by way of alternatingly engaging at dissimilar depths.

14. A Method for controlling a feeding device (10) of a belt drying installation (1) for dump or sewage sludge material (60) that has been dewatered to a pasty consistency, according to one of the preceding claims, said method comprising the following steps:
- detecting the shearing of the sludge material (60), preferably by means of a vane penetrometer;
- controlling the rotational speed of each of the rollers (11, 12) based on the detected shearing strength of the sludge material (60); preferably by means of a frequency inverter that is assigned to the drive motor of each of the rollers (11, 12).

15. The method according to claim 14,
- wherein in case of a detected shearing strength between 0.25 and 0.75 kN/cm², the rotational speed of at least one roller (11, 12) is between 1.75 and 1.85 min⁻¹;
- wherein in case of a detected shearing strength between 0.75 and 1.25 kN/cm², the rotational speed of at least one roller (11, 12) is between 1.85 and 1.95 min⁻¹;
- wherein in case of a detected shearing strength between 1.25 and 1.75 kN/cm², the rotational speed of at least one roller (11, 12) is between 1.95 and 2.10 min⁻¹;
- wherein in case of a detected shearing strength between 1.75 and 2.25 kN/cm², the rotational speed of at least one roller (11, 12) is between 2.10 and 2.30 min⁻¹;
- wherein in case of a detected shearing strength between 2.25 and 2.75 kN/cm², the rotational speed of at least one roller (11, 12) is between 2.30 and 2.50 min⁻¹;
- wherein in case of a detected shearing strength between 2.75 and 3.25 kN/cm², the rotational speed of at least one roller (11, 12) is between 2.50 and 2.70 min⁻¹;
- wherein in case of a detected shearing strength between 3.25 and 3.75 kN/cm², the rotational speed of at least one roller (11, 12) is between 2.70 and 2.90 min⁻¹;
- wherein in case of a detected shearing strength between 3.75 and 4.25 kN/cm², the rotational speed of at least one roller (11, 12) is between 2.90 and 3.15 min⁻¹;
- wherein in case of a detected shearing strength between 4.25 and 4.75 kN/cm², the rotational speed of at least one roller (11, 12) is between 3.15 and 3.45 min⁻¹;
- wherein in case of a detected shearing strength between 4.75 and 5.25 kN/cm², the rotational speed of at least one roller (11, 12) is between 4.25 and 4.75 min⁻¹;
- wherein in case of a detected shearing strength between 5.25 and 5.75 kN/cm², the rotational speed of at least one roller (11, 12) is between 3.80 and 4.25 min⁻¹;
- wherein in case of a detected shearing strength between 5.75 and 6.25 kN/cm², the rotational speed of at least one roller (11, 12) is between 4.25 and 4.75 min⁻¹;
- wherein in case of a detected shearing strength between 6.25 and 6.75 kN/cm², the rotational speed of at least one roller (11, 12) is between 4.75 and 5.25 min⁻¹;
- wherein in case of a detected shearing strength between 6.75 and 7.25 kN/cm², the rotational speed of at least one roller (11, 12) is between 5.25 and 5.75 min⁻¹;
- wherein in case of a detected shearing strength between 7.25 and 7.75 kN/cm², the rotational speed of at least one roller (11, 12) is between 5.75 and 6.50 min⁻¹; and/or
- wherein in case of a detected shearing strength between 7.75 and 8.25 kN/cm², the rotational speed of at least one roller (11, 12) is between 6.50 and 7.50 min⁻¹.

## Revendications

1. Dispositif d'alimentation (10) d'une installation de séchage par bande (1) pour des boues de vidange ou de boues d'égout (60) déshydratées jusqu'à l'obtention d'une consistance pâteuse,
dans lequel - dans la voie de transport (T) du matériau de boue (60) - au moins
- un premier rouleau (11) comportant des rainures transversales (14) en retrait par rapport à le diamètre extérieur (15) dudit premier rouleau (11) et
- un moyen de guidage (12 ; 13)
sont disposés par rapport au diamètre extérieur (15) dudit premier rouleau (11)
de telle manière que, lorsque le premier rouleau (11) tourne, le, le matériau de boue (60) soit aspiré dans les rainures transversales (14) et moulé dans des pressages extrudés (61) allongés;
**caractérisé en ce que**
- un peigne (70) est associé audit premier rouleau (11), qui a des dents (71) qui s'engagent de manière rigide dans les rainures transversales (14) et qui balaie les pièces moulées extrudées (61) parmi les rainures transversales (14);
- les extrémités (72) des dents (71) qui s'engagent de manière rigide dans les rainures transversales (14) définissant au moins une ligne d'engagement (75);
- les extrémités (72) de dent (71) qui s'engagent de manière rigide dans les rainures transversales (14) sont biseautées vers le col de dent (73) et le diamètre extérieur (15) dudit rouleau (11) formant un angle α produisant un effet de coupe, et
- les dents (71) du peigne (70) sont disposées à un angle β par rapport à une tangente dudit rouleau (11) qui coupe la ligne d'engagement, ledit angle β provoque un effet de pelage.

2. Dispositif d'alimentation (10) selon la revendication 1, **caractérisé en ce que** l'angle α produisant un effet de coupe est compris entre 25° et 50°, notamment entre 30° et 45°, notamment de préférence entre 35° et 40°.

3. Dispositif d'alimentation (10) selon la revendication 1 ou 2, **caractérisé en ce que** l'angle β produisant un effet de pelage est compris entre 18° et 32°, notamment entre 21° et 29°, notamment de préférence entre 24° et 26°.

4. Dispositif d'alimentation (10) selon l'une des revendications 1 à 3, **caractérisé en ce que** le peigne (70) est subdivisé en plusieurs segments (70a, 70b, 70c, ...), comportant respectivement de préférence six, sept, huit ou neuf dents, et ces segments (70a, 70b, 70c, ...) sont montés dans la direction axiale du rouleau (12) sur une traverse (74), de préférence de manière coulissante.

5. Dispositif d'alimentation (10) selon l'une des revendications précédentes, **caractérisé en ce que** le moyen de guidage est
- une plaque de guidage (13) ou
- un deuxième rouleau (12), lequel est monté à rotation en sens inverse par rapport au premier rouleau (11).

6. Dispositif d'alimentation (10) selon la revendication 5, **caractérisé en ce qu'**un rouleau (11, 12) présente une vitesse de rotation supérieure à celle de l'autre rouleau (12, 11).

7. Dispositif d'alimentation (10) selon la revendication 5 ou 6, le deuxième rouleau (12) possédant lui aussi des rainures transversales (14) en retrait par rapport à son diamètre extérieur, **caractérisé en ce**
- **qu'**un peigne (70) comportant également des dents (71) qui s'engagent de manière rigide dans les rainures transversales (14) et qui balaie les pièces moulées extrudées (61) des rainures transversales (14) est également associé au deuxième rouleau (11, 12) ;
- **que** les extrémités (72) des dents (71) qui s'engagent de manière rigide dans les rainures transversales (14) définissent au moins une ligne d'engagement (75) ;
- **que** les extrémités (72) de dent (71) qui s'engagent de manière rigide dans les rainures transversales (14) en direction du col de la dent (73) et que le diamètre extérieur (15) du rouleau (11) sont biseautés selon un angle α qui provoque un effet de coupe ; et
- **que** les dents (71) du peigne (70) sont disposées sous un angle β qui provoque un effet de pelage par rapport à une tangente du rouleau (11) qui croise la ligne d'engagement (75).

8. Dispositif d'alimentation (10) selon la revendication 7, **caractérisé en ce que** les rainures transversales (14) des deux rouleaux (11, 12) sont configurées décalées les unes par rapport aux autres ou en vis-à-vis les unes des autres, un rouleau (11, 12) étant, à cet effet, monté coulissant de préférence dans le sens axial par rapport à l'autre rouleau (12, 11).

9. Dispositif d'alimentation (10) selon l'une des revendications précédentes, **caractérisé en ce que** le moyen de guidage (12 ; 13) est monté coulissant dans le sens radial par rapport au premier rouleau (11) .

10. Dispositif d'alimentation (10) selon l'une des revendications précédentes, **caractérisé en ce que** les rouleaux (11, 12) sont composés de disques segmentés (16, 17), lesquels sont de préférence fabriqués en caoutchouc dur, en matière plastique au moyen du moulage par injection et/ou en métal au moyen de la découpe au laser.

11. Dispositif d'alimentation (10) selon l'une des revendications précédentes, **caractérisé en ce que** les rainures transversales (14) dans les rouleaux (11, 12) présentent une forme rectangulaire.

12. Dispositif d'alimentation (10) selon l'une des revendications précédentes, **caractérisé en ce que** le dispositif d'alimentation (10) est disposé par rapport à une bande transporteuse (20) de l'installation de séchage à bande (1) de telle sorte que l'au moins une ligne d'engagement (75) et la bande transporteuse (20) sont espacées l'une de l'autre d'entre 20 et 40 cm, notamment d'entre 25 et 35 cm, notamment de préférence de 30 cm.

13. Dispositif d'alimentation (10) selon l'une des revendications précédentes, **caractérisé en ce que** les extrémités (72) des dents (71) qui s'engagent de manière rigide dans les rainures transversales (14) d'un rouleau (11 ; 12) forment deux lignes d'engagement (75a ; 75b) mutuellement décalées de manière parallèle par un engagement alterné à des profondeurs différentes.

14. Procédé de commande d'une installation de séchage à bande (1) pour un matériau de décharge ou de boues d'épuration (60) déshydraté jusqu'à la consistance pâteuse selon l'une des revendications précédentes, comprenant les étapes suivantes :
- détection de la résistance au cisaillement du matériau de boue (60), de préférence au moyen d'une sonde flottante;
- commande de la vitesse de rotation de chaque rouleau (11, 12) sur la base de la résistance au cisaillement détectée du matériau boueux (60) ; de préférence au moyen d'un variateur de fréquence associé au moteur d'entraînement de chaque rouleau (11, 12).

15. Procédé selon la revendication 14,
- avec lequel, pour une résistance au cisaillement détectée comprise entre 0,25 et 0,75 kN/cm², la vitesse de rotation d'au moins un rouleau (11, 12) est comprise entre 1,75 et 1,85 t/min. ;
- avec lequel, pour une résistance au cisaillement détectée comprise entre 0,75 et 1,25 kN/cm², la vitesse de rotation d'au moins un rouleau (11, 12) est comprise entre 1,85 et 1,95 t/min. ;
- avec lequel, pour une résistance au cisaillement détectée comprise entre 1,25 et 1,75 kN/cm², la vitesse de rotation d'au moins un rouleau (11, 12) est comprise entre 1,95 et 2,10 t/min. ;
- avec lequel, pour une résistance au cisaillement détectée comprise entre 1,75 et 2,25 kN/cm², la vitesse de rotation d'au moins un rouleau (11, 12) est comprise entre 2,10 et 2,30 t/min. ;
- avec lequel, pour une résistance au cisaillement détectée comprise entre 2,25 et 2,75 kN/cm², la vitesse de rotation d'au moins un rouleau (11, 12) est comprise entre 2,30 et 2,50 t/min. ;
- avec lequel, pour une résistance au cisaillement détectée comprise entre 2,75 et 3,25 kN/cm², la vitesse de rotation d'au moins un rouleau (11, 12) est comprise entre 2,50 et 2,70 t/min. ;
- avec lequel, pour une résistance au cisaillement détectée comprise entre 3,25 et 3,75 kN/cm², la vitesse de rotation d'au moins un rouleau (11, 12) est comprise entre 2,70 et 2,90 t/min. ;
- avec lequel, pour une résistance au cisaillement détectée comprise entre 3,75 et 4,25 kN/cm², la vitesse de rotation d'au moins un rouleau (11, 12) est comprise entre 2,90 et 3,15 t/min. ;
- avec lequel, pour une résistance au cisaillement détectée comprise entre 4,25 et 4,75 kN/cm², la vitesse de rotation d'au moins un rouleau (11, 12) est comprise entre 3,15 et 3,45 t/min. ;
- avec lequel, pour une résistance au cisaillement détectée comprise entre 4,75 et 5,25 kN/cm², la vitesse de rotation d'au moins un rouleau (11, 12) est comprise entre 4,25 et 4,75 t/min. ;
- avec lequel, pour une résistance au cisaillement détectée comprise entre 5,25 et 5,75 kN/cm², la vitesse de rotation d'au moins un rouleau (11, 12) est comprise entre 3,80 et 4,25 t/min. ;
- avec lequel, pour une résistance au cisaillement détectée comprise entre 5,75 et 6,25 kN/cm², la vitesse de rotation d'au moins un rouleau (11, 12) est comprise entre 4,25 et 4,75 t/min. ;
- avec lequel, pour une résistance au cisaillement détectée comprise entre 6,25 et 6,75 kN/cm², la vitesse de rotation d'au moins un rouleau (11, 12) est comprise entre 4,75 et 5,25 t/min. ;
- avec lequel, pour une résistance au cisaillement détectée comprise entre 6,75 et 7,25 kN/cm², la vitesse de rotation d'au moins un rouleau (11, 12) est comprise entre 5,25 et 5,75 t/min. ;
- avec lequel, pour une résistance au cisaillement détectée comprise entre 7,25 et 7,75 kN/cm², la vitesse de rotation d'au moins un rouleau (11, 12) est comprise entre 5,75 et 6,50 t/min. ; et/ou
- avec lequel, pour une résistance au cisaillement détectée comprise entre 7,75 et 8,25 kN/cm², la vitesse de rotation d'au moins un rouleau (11, 12) est comprise entre 6,50 et 7,50 t/min.
